# EUROPEAN PATENT SPECIFICATION

(11) **EP 2 756 927 B1**
(45) Date of publication and mention of the grant of the patent: **27.09.2017**
(21) Application number: 13195789.6
(22) Date of filing: 05.12.2013
(51) Int. Cl.: B25F 5/02

(54) **Electric power tool with improved visibility in darkness**
Elektrowerkzeug mit einer verbesserten Sichtbarkeit bei Dunkelheit
Outil électrique avec une visibilité amélioré dans l'obscurité

(30) Priority: 17.01.2013 US 201313743866
(43) Date of publication of application: 23.07.2014
(73) Proprietor: Black & Decker Inc., Newark, Delaware 19711 (US)
(72) Inventor: Friedman, Brian E., Baltimore, MD Maryland 21231 (US); Korick, Paul J, Etters, PA Pennsylvania 17319 (US)
(74) Representative: SBD IPAdmin

(56) References cited:
- EP-A1- 1 344 609
- EP-A1- 1 477 282
- US-A1- 2006 176 682
- US-A1- 2007 018 191
- US-B1- 7 200 516

## Description

The present application generally relates to electric power tools and more particularly to an electric power tool according to the preamble of claim 1 that includes a light assembly.

An electric power tool is herein disclosed. The electric power tool comprises a motor, a motor housing at least partly encasing the motor, the motor housing having a top portion, a bottom portion opposite to the top portion, and first and second side walls disposed between the top and bottom portions, a handle housing connected to the bottom portion of the motor housing, a spindle operatively connected to the motor, the spindle being rotatable about a rotational axis, and a first light assembly disposed on one of the first and second side walls of the motor housing.

EP1344609 discloses an electric power tool having all of the features in the precharacterising portion of claim 1. EP1477282 discloses a power tool with a light unit. US2007/018191 discloses a side view LED. The invention provides an electric power tool according to claim 1.

For a fuller understanding of the nature and objects of the present invention, reference should be made to the following detailed description and the accompanying drawings, in which:
FIG. 1 is an overall perspective view of an electric power tool in accordance with the present invention.
FIGS. 2A and 2B are detailed views of the light assembly in accordance with the present invention, where FIGS. 2A and 2B are side and front views of the light assembly, respectively.

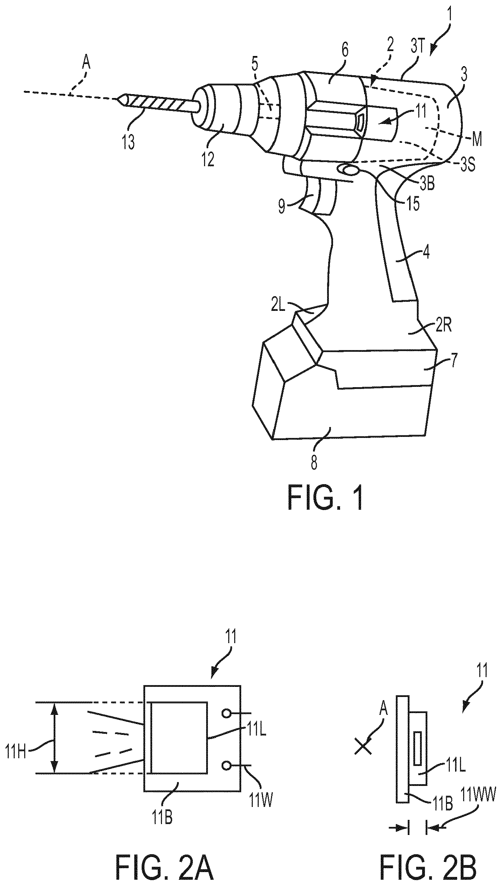

Referring to FIG. 1, an electric power tool **1** preferably includes a main housing **2** made of synthetic resin and preferably composed of left and right half casings (2L and 2R, respectively). These half casings 2L, 2R may be fitted together to form a motor housing **3** that encases a motor M in the rear portion thereof and a pistol grip handle **4** that extends below from the motor housing **3** and encases a switch mechanism (not shown). Preferably, in each half casing 2L, 2R, the half motor housing **3** is integrally molded with the half grip pistol handle **4.**

Coupled to the front portion of the motor housing **3** may be a metallic gear housing **6** that encases reduction gears and other components (not shown). Furthermore, a spindle **5** of the electric power tool **1** protrudes forward from the top portion of the metallic gear housing **6.** An end effector, tool holder or chuck 12 is rotationally fixed to spindle 5. Tool holder 12 preferably holds a tool 13, such as a drill bit, a hole saw, a screwdriving bit, a chisel, etc. Persons skilled in the art will recognize that spindle 5 (and thus tool holder or chuck 12, and tool 13) will rotate about a rotational axis A.

The electric power tool **1** may include at the bottom end of the grip handle **4** a battery pack coupling portion **7** to which is mounted a battery pack **8** containing a plurality of storage cells (not shown) that supplies electric power to the power tool **1.** The battery-operated electric power tool **1** further includes an on/off trigger **9** that is impressed inward to operate the switch mechanism accommodated within the pistol grip handle **4.**

A light assembly **11** is disposed on the sides of power tool 1, on the sides of housing 2, e.g., the left and right casings 2L, 2R. The light assemblies 11 are placed on motor housing 3, preferably near gear housing 6. Referring to FIGS. 1-2, the light assembly **11** includes a light-emitting diode (LED), preferably with the light emitting end of the light source 11L exposed at the front of the light assembly **11.** As the light source 11L is electrically connected to the drive circuit of the motor, pulling in the on/off trigger **9** activates the motor and simultaneously switches on the light source **11L** to illuminate any objects located in front of the tool bit 13. The light source 11L is a side view LED, which is mounted on a board 11B. Wires 11W may be connected to board 11B for providing power to light source 11L.

A portion of (if not the entire) board 11B is substantially parallel to rotational axis A. The side view LEDs, such as unit no. 50-215 manufactured by Everlight Electronics Co., Ltd. of Taiwan (ROC), are installed on board 11B by moving it in an installation direction substantially perpendicular to a portion of (if not the entire) board 11B, and emit at least some (if not the majority) of light in a direction substantially perpendicular to the installation direction. Persons skilled in the art shall also recognize that some (if not the majority) of the light emitted by light source 11L is preferably emitted in a direction substantially parallel to rotational axis A.

Referring to FIG. 2, the light source 11L has a height 11H which is larger than the width 11 WW thereof. This allows for a lower envelope profile compared to other LEDs, which can minimize the volume expansion of housing 2 necessary to accommodate light assemblies 11.

It should be noted that the present invention may be applicable not only to electric power tools. as in the foregoing embodiment but also to other electric power tools, such as power drills, driver-drills, impact torque wrenches, and other electric power tools, whether they are battery operated tools or AC (alternating current) tools.

It will thus be seen that the present invention efficiently attains the objects set forth above, among those made apparent from the preceding description. As other elements may be modified, altered, and changed without departing from the scope of the present invention, it is to be understood that the above embodiments are only an illustration and not restrictive in any sense. The scope of the present invention is limited only by the terms of the appended claims.

## Claims

1. An electric power tool comprising:
a motor (M);
a motor housing (2) at least partly encasing the motor (M), the motor housing (2) having a top portion, a bottom portion opposite to the top portion, and first and second side walls disposed between the top and bottom portions;
a handle housing (4) connected to the bottom portion of the motor housing (2);
a spindle (S) operatively connected to the motor (M), the spindle (S) being rotatable about a rotational axis (A);
an end effector (12) operatively connected to the spindle (5); and
a first light assembly (11) disposed on at least one of the first and second side walls of the motor housing (2) and configured to illuminate a region adjacent the end effector (12);
**characterized in that** the first light assembly (11) comprises a board (11B) having at least one portion thereof being substantially parallel to the rotational axis (A), and a side view LED (11L) mounted on the board (11B); wherein the side view LED (11L) is installed on the board (11B) by moving it in a direction substantially perpendicular to the at least one portion of the board (11B), and the side view LED (11L) emitting at least some of its light in a direction substantially perpendicularly to the installation direction;
wherein the side view LED (11L) has a height (11H) and width (11W), the height (11H) being larger than the width (11W).

2. The electric power tool of Claim 1, wherein the side view LED (11L) emits some light substantially parallel to the rotational axis (A).

3. The electric power tool of either of Claims 1 or 2, wherein the side view LED (11L) emits some light substantially perpendicular to the at least one portion of the board (11B).

4. The electric power tool of Claim 1, further comprising a second light assembly (11) disposed on the other of the first and second side walls of the motor housing (2).

## Patentansprüche

1. Elektrowerkzeug, aufweisend:
einen Motor (M);
ein Motorgehäuse (2), das den Motor (M) zumindest teilweise umhüllt, wobei das Motorgehäuse (2) einen oberen Abschnitt, einen unteren Abschnitt, der dem oberen Abschnitt gegenüberliegt, und eine erste und eine zweite Seitenwand, die zwischen dem oberen und dem unteren Abschnitt angeordnet sind, aufweist;
ein Griffgehäuse (4), das mit dem unteren Abschnitt des Motorgehäuses (2) verbunden ist;
eine Spindel (S), die mit dem Motor (M) operativ verbunden ist, wobei die Spindel (S) um eine Drehachse (A) drehbar ist;
einen Endeffektor (12), der mit der Spindel (5) operativ verbunden ist; und
einen ersten Lichtmechanismus (11), der an mindestens einer der ersten und der zweiten Seitenwand des Motorgehäuses (2) angeordnet ist und konfiguriert ist, einen Bereich benachbart zum Endeffektor (12) zu beleuchten,
**dadurch gekennzeichnet**, da der erste Lichtmechanismus (11) eine Platine (11B) mit mindestens einem Abschnitt davon im Wesentlichen parallel zur Drehachse (A) und eine Seitenansichts-LED (11L), die auf der Platine (11B) angebracht ist, aufweist;
wobei die Seitenansichts-LED (11L) auf der Platine (11B) eingebaut ist, indem sie in eine Richtung im Wesentlichen senkrecht zu dem mindestens einen Abschnitt der Platine (11B) bewegt wurde, und die Seitenansichts-LED (11L) zumindest etwas von ihrem Licht in eine Richtung im Wesentlichen senkrecht zu der Einbaurichtung emittiert;
wobei die Seitenansichts-LED (11L) eine Höhe (11H) und eine Breite (11W) hat, wobei die Höhe (11H) größer als die Breite (11W) ist.

2. Elektrowerkzeug nach Anspruch 1, wobei die Seitenansichts-LED (11L) etwas Licht im Wesentlichen parallel zur Drehachse (A) emittiert.

3. Elektrowerkzeug nach einem der Ansprüche 1 oder 2, wobei die Seitenansichts-LED (11L) etwas Licht im Wesentlichen senkrecht zu mindestens einem Teil der Platine (11B) emittiert.

4. Elektrowerkzeug nach Anspruch 1, ferner aufweisend einen zweiten Lichtmechanismus (11), der an der anderen der ersten und zweiten Seitenwand des Motorgehäuses (2) angeordnet ist.

## Revendications

1. Outil électrique comprenant :
un moteur (M) ;
un boîtier de moteur (2) enserrant au moins en partie le moteur (M), le boîtier de moteur (2) ayant une partie supérieure, une partie inférieure opposée à la partie supérieure et une première et une seconde paroi latérale disposées entre les parties supérieure et inférieure ;
un boîtier de poignée (4) raccordée à la partie inférieure du boitier de moteur (2);
une broche (S) raccordée en service au moteur (M), la broche (S) pouvant tourner autour d'un axe de rotation (A) ;
un effecteur terminal (12) raccordé en service à la broche (5) ; et
un premier ensemble d'éclairage (11) disposé sur au moins l'une des première et seconde parois latérales du boîtier de moteur (2) et configuré pour éclairer une région adjacente à l'effecteur terminal (12) ;
**caractérisé en ce que** le premier ensemble d'éclairage (11) comprend une plaque (11B) ayant au moins une de ses parties qui est sensiblement parallèle à l'axe de rotation (A) et une DEL à vue latérale (11L) montée sur la plaque (11B) ;
dans lequel la DEL à vue latérale (11L) est installée sur la plaque (11B) en la déplaçant dans une direction sensiblement perpendiculaire à la au moins une partie de la plaque (11B) et la DEL à vue latérale (11L) émettant au moins une certaine quantité de sa lumière dans une direction sensiblement perpendiculaire à la direction d'installation ;
dans lequel la DEL à vue latérale (11L) a une hauteur (11H) et une largeur (11W), la hauteur (11H) étant plus grande que la largeur (11W).

2. Outil électrique selon la revendication 1, dans lequel la DEL à vue latérale (11L) émet une certaine quantité de lumière sensiblement parallèlement à l'axe de rotation (A).

3. Outil électrique selon l'une ou l'autre des revendications 1 ou 2, dans lequel la DEL à vue latérale (11L) émet une certaine quantité de lumière sensiblement perpendiculairement à la au moins une partie de la plaque (11B).

4. Outil électrique selon la revendication 1, comprenant en outre un second ensemble d'éclairage (11) disposé sur l'autre des première et seconde parois latérales du boîtier de moteur (2).
